# EUROPÄISCHE PATENTSCHRIFT

(11) **EP 1 580 234 B1**
(45) Veröffentlichungstag und Bekanntmachung des Hinweises auf die Patenterteilung: **03.12.2008**
(21) Anmeldenummer: 05003558.3
(22) Anmeldetag: 18.02.2005
(51) Int. Cl.: C08L 53/02

(54) **Blend aus Styrol-Butadien-Blockcopolymeren**
blend of styrene/butadiene block copolymers
mélange des copolymérisats séquences de styrène/butadiène

(30) Priorität: 23.03.2004 DE 102004014585
(43) Veröffentlichungstag der Anmeldung: 28.09.2005
(73) Patentinhaber: BASF SE, 67056 Ludwigshafen (DE)
(72) Erfinder: Knoll, Konrad, Dr., 68199 Mannheim (DE); Weidisch, Roland, Dr., 39218 Schönebeck (DE)

(56) Entgegenhaltungen:
- EP-A- 0 254 346
- WO-A-03/046075
- US-B1- 6 369 160

## Beschreibung

Die Erfindung betrifft Mischungen enthaltend
a) 5 bis 40 Gew.-% eines linearen Blockcopolymeren aus vinylaromatischen Monomeren und Dienen der Struktur (I) S₁-(BIS)₁-S₂ mit einem Weichphasenanteil (B/S)₁ von höchstens 55 Gew.-%, bezogen auf das Blockcopolymer (I) und
b) 95 bis 60 Gew.-% eines linearen Blockcopolymeren aus vinylaromatischen Monomeren und Dienen der Struktur (II) S₃-(B/S)₂-S₄ mit einem Weichphasenanteil (B/S)₂ von mindestens 65 Gew.%, bezogen auf das Blockcopolymer (II)
wobei
S₁ für einen Block aus vinylaromatischen Monomeren mit einer zahlenmittleren Molmasse Mₙ im Bereich von 40.000 bis 100.000 g/mol,
S₂, S₃ und S₄ jeweils für Blöcke aus vinylaromatischen Monomeren mit einer zahlenmittleren Molmasse Mₙ im Bereich von 5.000 bis 20.000 g/mol,
(B/S)₁ und (B/S)₂ jeweils für Copolymerblöcke aus Dienen und vinylaromatischen Monomeren mit einer zahlenmittleren Molmasse Mₙ im Bereich von 15.000 bis 40.000 g/mol stehen

Desweiteren betrifft die Erfindung Verfahren zur Herstellung der Mischungen und deren teilweise oder vollständige Hydrierung.

Styrol-Butadien-Blockcopolymere und Mischungen mit Polystyrol sind mit vielfältigen Strukturen bekannt. Die Blockcopolymere können linear oder sternförmig verzweigt sein und Blöcke gleicher oder unterschiedlicher Molmassen aufweisen, so dass symmetrische und unsymmetrische Strukturen resultieren. Die Butadien-haltigen Blöcke können auch Styrol enthalten. Zwischen den einzelne Blöcken können scharfe oder verschmierte Übergänge auftreten. Eine Übersicht über Styrol-Butadien-Blockcopolymer findet sich z. B. in Kunststoff Handbuch, Bd. 4 Polystyrol, Carl Hanser Verlag München-Wien 1996, Kapitel 3.3.4, Seiten 161 -164.

Mischungen von linearen Dreiblockcopolymeren S-B-S mit unterschiedlicher Zusammensetzung und Molmassen sind aus DE-A 29 40 861 bekannt. Die Mischung wird durch sequentielle anionische Polymerisation mit zweifacher, gemeinsamer Initator- und Styroldosierung erhalten. Das Verhältnis der Initiatormenge in der ersten Stufe zur der in der zweiten Stufe liegt im Bereich von 1:2 bis 1:7, das bedeutet, das Blockcopolymere mit dem kürzeren Styrolblock überwiegt deutlich. Während der Übergang zwischen dem ersten Styrolblock und dem Butadien-haltigen Block scharf ist, geht der Butadien-haltige Block graduell in den zweiten Styrolblock über.

Die US 5,227,419 beschreibt Mischungen von Blockcopolymeren, deren Butadien-haltige Blöcke einen Styrolgradienten aufweisen. In der Mischung liegt das Blockcopolymere mit dem höheren Styrolblockanteil ebenfalls in untergeordneter Menge vor.

Die beschriebenen Blockcopolymeren führen jedoch in Mischungen mit Polystyrol bei vergleichbarer Zähigkeit zu einer drastischen Verringerung des Steifigkeit gegenüber dem von Polystyrol. Auch die Wärmeformbeständigkeit wird deutlich erniedrigt.

Die WO 03/046075 beschreibt transparente Styrol-Butadien-Blockcopolymermischungen, die in Mischungen mit Polystyrol ein verbessertes Zähigkeit/Steifigkeitsverhältnis und eine höhere Wärmeformbeständigkeit aufweisen.

Aufgabe der vorliegenden Erfindung war es, verbesserte Elastomere auf Basis von Styrol-Butadien-Blockcopolymeren mit niedriger Streckspannung und niedrigem Elastizitätsmodul bereitzustellen. Die Elastomeren sollten außerdem ein hohes elastisches Rückstellvermögen aufweisen.

Demgemäss wurden die oben genannten Mischungen gefunden.

Bevorzugt enthalten die Mischungen
a) 10 bis 30 Gew.% des Blockcopolymeren der Struktur (I) und
b) 90 bis 70 Gew.% des Blockcopolymeren der Struktur (II).

Als vinylaromatische Monomere können beispielsweise Styrol, alpha-Methylstyrol, kernalkylierte Styrole wie p-Methylstyrol oder Tertiärbutylstyrol, oder 1,1-Diphenylethylen oder Mischungen davon eingesetzt werden.

Bevorzugte Diene sind Butadien, Isopren, 2,3-Dimethylbutadien, 1,3-Pentadien, 1,3-Hexadien oder Piperylen oder deren Mischungen; besonders bevorzugt sind Butadien und Isopren.

Besonders bevorzugte Blockcopolymere werden aus den Monomeren Styrol und Butadien gebildet.

Die Blöcke (S/B)₁ und (S/B)₂ sind aus Dienen und vinylaromatischen Monomeren aufgebaut. Das Verhältnis vinylaromatisches Monomer/Dien liegt für die Blöcke (S/B)₁ und (S/B)₂ in der Regel im Bereich von 0,1 bis 0,9, wobei in den Blöcken (S/B)₁ und (S/B)₂ das gleiche oder verschiedene Verhältnisse vinylaromatisches Monomer/Dien vorliegen können. Bevorzugt weisen die Copolymerblöcke (S/B)₁ und (S/B)₂ ein Verhältnis vinylaromatisches Monomer/Dien im Bereich von 0,3 bis 0,7 auf. Besonders bevorzugt weisen die Copolymerblöcke eine statistische Verteilung der Dien- und vinylaromatischen Monomeren auf. Die Blöcke (S/B)₁ und (S/B)₂ können auch in mehrere Blöcke mit unterschiedlichem Verhältnis vinylaromatisches Monomer/Dien unterteilt sein.

Die Übergänge zwischen den einzelnen Blöcken sind scharf, das heißt die Zusammensetzung ändert sich sprunghaft.

Die zahlenmittleren Molmassen Mₙ von S₁ liegen im Bereich von 40.000 bis 100.000 g/mol, bevorzugt im Bereich von 45.000 bis 70.000, besonders bevorzugt im Bereich von 50.000 bis 60.000. Die zahlenmittleren Molmassen Mₙ von S₂, S₃, und S₄ liegen jeweils und unabhängig voneinander im Bereich von 5.000 bis 20.000 g/mol, bevorzugt im Bereich von 8.000 bis 17.000 g/mol, besonders bevorzugt im Bereich von 11.000 bis 14.000 g/mol. Die Blöcke B₁ und B₂ aus Dienen oder Copolymerblöcke aus Dienen und vinylaromatischen Monomeren weisen jeweils unabhängig voneinander eine zahlenmittleren Molmasse Mₙ im Bereich von 15.000 bis 40.000 g/mol, bevorzugt im Bereich von 18.000 bis 30.000 g/mol, besonders bevorzugt im Bereich von 20.000 bis 25.000 g/mol auf.

Bevorzugt sind die Blockcopolymeren (II) symmetrisch aufgebaut, das heißt die Blöcke S₃ und S₄ weisen die gleichen zahlenmittleren Molmassen Mₙ auf. Die Blockcopolymeren (I) sind dagegen deutlich unsymmetrisch mit einem Verhältnis der zahlenmittleren Molmassen von S, zu S₂ von mindestens 2, bevorzugt im Bereich von 5 - 8.

Die erfindungsgemäßen Mischungen können hergestellt werden, indem die Blockcopolymeren (I) und (II) jeweils durch sequentielle anionische Polymerisation von vinylaromatischen Monomeren und Dienen mit alkalimetallorganischen Initiatoren nacheinander oder in verschiedenen Reaktoren hergestellt und anschließend im Gewichtsverhältnis im Bereich von 5/95 - 40/60, bevorzugt 10/90 bis 30/70 abgemischt werden.

Als anionischer Polymerisationsinitiator können die üblichen mono-, bi- oder multifunktionellen Alkalimetallalkyle, -aryle oder -aralkyle verwendet werden. Zweckmäßigerweise werden lithiumorganische Verbindungen eingesetzt wie Ethyl-, Propyl-, Isopropyl-, n-Butyl-, sek.-Butyl-, tert.-Butyl-, Phenyl-, Diphenylhexyl-, Hexamethyldi-, Butadienyl-, Isoprenyl-, Polystyryllithium, 1,4-Dilithiobutan, 1,4-Dilithio-2-buten oder 1,4-Dilithiobenzol. Die benötigte Menge an Polymerisationsinitiator richtet sich nach dem gewünschten Molekulargewicht. In der Regel liegt sie im Bereich von 0,001 bis 5 mol-%, bezogen auf die Gesamtmonomermenge.

Die Polymerisation kann in Gegenwart eines Lösungsmittels vorgenommen werden. Als Lösungsmittel eignen sich die für anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Octan, Benzol, Alkylbenzole, wie Toluol, Xylol, Ethylbenzol oder Decalin oder geeignete Gemische. Bevorzugt werden Cyclohexan und Methylcyclohexan verwendet.

In Gegenwart von retardierend auf die Polymerisationsgeschwindigkeit wirkenden Metallorganylen, wie Magnesium-, Aluminium- oder Zinkalkylen, kann die Polymerisation auch lösungsmittelfrei durchgeführt werden.

Nach Beendigung der Polymerisation können die lebenden Polymerketten mit einem Kettenabbruchmittel verschlossen werden. Als Kettenabbruchmittel eignen sich protonaktive Substanzen oder Lewis-Säuren, wie beispielsweise Wasser, Alkohole, aliphatische oder aromatische Carbonsäuren sowie anorganische Säuren wie Kohlensäure oder Borsäure.

Die Abmischung der Blockcopolymeren kann zu beliebiger Zeit nach Beendigung der Polymerisation, also beispielsweise vor oder nach der Terminierung, Entgasung oder sonstigen Aufarbeitungsschritten erfolgen. Die zeitlich oder räumlich getrennte Herstellung der Blockcopolymeren (I) und (II) hat den Vorteil, dass die zahlenmittleren Molmassen Mₙ der einzelnen Blöcke S und B frei gewählt werden können.

Nach einem alternativen Verfahren können die Blockcopolymeren (I) und (II) durch sequentielle anionische Polymerisation von vinylaromatischen Monomeren und Dienen mit alkalimetallorganischen Initiatoren gleichzeitig in einem Reaktoren durch zweifache, gemeinsame Dosierung von Initiator und vinylaromatischen Monomeren hergestellt werden, wobei das Verhältnis der Initiatormenge I₁ der ersten Dosierung zur Initiatormenge I₂ der zweiten Dosierung vom gewünschten Mischungsverhältnis und den Blockstrukturen der Blockcopolymeren (I) und (II) abhängt. Nach jeder Dosierung wird bis zum vollständigen Umsatz der Monomeren polymerisiert. Die nach diesem Verfahren erhaltenen Mischungen weisen jeweils gleiche zahlenmittleren Molmassen Mₙ für die Blöcke S₂ und S₄ und gleiche zahlenmittleren Molmassen Mₙ für die Blöcke (S/B)₁ und (S/B)₂ auf. Die aufeinanderfolgenden Dosierungen und die gebildeten Polymerspezies sind in Tabelle 1 zusammengestellt:

**Tabelle 1: Dosierfolge bei zweifacher Initiatordosierung**

| Stufe | Monomere/Initiator | Gebildete Spezies |
|---|---|---|
| 1 | Initiator (I₁) und vinylaromatisches Monomer | |
| 2 | Initiator (I₂) und vinylaromatisches Monomer | S₁-I₁ |
| | | S₃-I₂ |
| 3 | Dien und vinylaromatisches Monomer | S₁-(S/B)₁-I₁ |
| | | S₃-(S/B)₂-I₂ |
| 4 | vinylaromatisches Monomer | S₁-(S/B)₁-S₂-I₁, |
| | | S₃-(S/B)₂-S₄-I₂ |
| 5 | Terminierunsreagenz, z.B. Isopropanol | S₁-(S/B)₁-S₂ |
| | | S₃-(S/B)₂-S₄ |

Durch Zugabe von Lewis-Basen, wie Tetrahydrofuran, oder von Kaliumsalzen, wie Kaliumtetrahydrolinaloolat, kann eine statistische Verteilung der vinylaromatischen Monomeren und Dienen in den Blöcken (S/B)₁ und (S/B)₂ erreicht werden.

Die erfindungsgemäßen Mischungen aus den linearen Blockcopolymeren (I) und (II) können mit thermoplastischen Polymeren in weiten Bereichen abgemischt werden.

Durch die strukturelle Ähnlichkeit weisen die Blockcopolymeren (I) und (II) eine hohe Mischbarkeit auf und es kommt zu keiner Makrophasenseparation. Im erfindungsgemäßen Mischungsbereich findet man eine wurmartige, zylindrische und hexagonale Morphologie und elastomeres Verhalten.

Aufgrund des unterschiedlichen Weichphasenanteils Verhalten sich die Blockcopolymeren (I) wie Thermoplasten, die Blockcopolymeren (II) wie Elastomere. Der Weichphasenanteil (S/B)₁ des Blockcopolymeren (I) beträgt höchstens 55 Gew.-%, bevorzugt 20 bis 50 Gew.-%, bezogen auf das Blockcopolymer (I). Das Blockcopolymer (II) besitzt einen Weichphasenanteil (B/S)2 von mindestens 65 Gew.-%, bevorzugt im Bereich von 70 bis 90 Gew.-%. Bei hohen Anteilen an Blockcopolymeren (I) zeigen die Mischungen ein besonders hohes Zähigkeits/Steifigkeistverhältnis mit einem Maximum von E-Modul und Streckspannung. Bei etwa 80 Gew.-% Blockcopolymer (I) und 20 Gew.% Blockcopolymer (II) findet man eine Lamellenstruktur und eine hohe Reißdehnung von etwa 450%.

Im erfindungsgemäßen Mischungsbereich verhalten sich die Blockcopolymermischungen wie Elastomere und weisen bevorzugt einen E-Modul im Bereich von 50 bis 200 MPa, bevorzugt im Bereich von 60 bis 180 MPa auf. Ferner weisen sie ein hohes elastisches Rückstellvermögen auf, welches durch den geringen Zugverformungsrest im Hysterese-Versuch erkennbar ist.

Die erfindungsgemäße Blockcopolymermischungen lassen sich durch teilweise oder vollständige Hydrierung modifizieren. In der Regel liegt der Hydriergrad der olefinischen Doppelbindungen bei 97 % und höher, der Hydrierungsgrad der vinylaromatischen Monomeren beträgt bevorzugt mindestens 90 %, besonders bevorzugt mindestens 95 insbesondere 98 %.

Der Anteil der einpolymerisierten Dieneinheiten, der in der 1,2-Vinylform vorliegt, kann durch die Zugabe von Substanzen mit Donoreigenschaften, wie Ether oder Amine, geregelt werden.

Bevorzugt werden hierfür Tetrahydrofuran, Dimethoxyethan oder 2-Alkylfurfurylether in Mengen von 0,1 bis 1 Vol.-%, insbesondere 0,25 bis 0,5 Vol.-%, bezogen auf den als Lösungsmittel verwendeten Kohlenwasserstoff, z.B. Cyclohexan.

Anschließend an die Herstellung des Blockcopolymeren werden die ungesättigten Bindungen der Dieneinheiten und auch der vinylaromatischen Einheiten des Blockcopolymeren mit einem Hydrierkatalysator hydriert. Bevorzugt werden geträgerte Hydrierkatalysatoren eingesetzt. Als Trägermaterial eignen sich beispielsweise anorganische Substrate wie Bariumsulfat, Silikate, Kohlenstoff oder Aluminiumoxide. Geeignete Hydriermetalle sind beispielsweise Nickel, Kobalt, Rhodium, Ruthenium, Palladium, Platin oder andere Metalle der Gruppe 8.

Die Hydrierung erfolgt bevorzugt in einem gesättigten Kohlenwasserstoff als Lösungsmittel, in welchem das Blockcopolymere löslich ist. Bevorzugt werden cycloaliphatische Kohlenwasserstoffe, insbesondere Cyclohexan. Sinnvollerweise wird das gleiche Lösungsmittel wie bei der Polymerisation verwendet, so dass die Hydrierung in einem Verfahrensschritt, der sich an die Polymerisation anschließt, erfolgen kann. Die Hydrierung kann diskontinuierlich oder kontinuierlich erfolgen, bevorzugt ist eine kontinuierliche Hydrierung an einem Festbettkatalysator.

Die Hydrierung erfolgt im allgemeinen bei Temperaturen im Bereich von 40°C bis 250°C, besonders bevorzugt im Bereich von 120°C bis 180°C. Die Hydrierung kann bei Normaldruck bis 350 bar bevorzugt im Bereich von 100 bis 250 bar durchgeführt werden.

### Beispiele:

### SB I:

Das Blockcopolymer SB I der Struktur (I) mit einem aus zwei statistischen Copolymerblöcken aufgebauten Mittelblock (S/B) und einem Weichphasenanteil von 49 Gew.-% wurde entsprechend Beispiel 9 aus WO 00/58380 durch sequentielle anionische Polymersiation von Styrol und Butadien in Gegenwart von Kaliumtertiäramylat als Randomizer hergestellt.

### SB II:

Das Blockcopolymer SB II der Struktur (II) mit einem aus zwei statistischen Copolymerblöcken aufgebauten Mittelblock (S/B) und einem Weichphasenanteil von 78 Gew.-% wurde entsprechend Beispiel 2 aus US 6,197,889 B1 durch sequentielle anionische Polymersiation von Styrol und Butadien in Gegenwart von Kaliumtertiäramylat als Randomizer hergestellt.

### Messungen:

Die mechanischen Werte wie E-Modul, Zugfestigkeit und Reißdehnung wurden nach ISO 527 bestimmt. Der Zugverformungsrest wurde aus Hystereseversuchen ermittelt.

### Beispiele 1 - 4 und Vergleichsversuche V1 bis V6:

Zur Herstellung der Blockcopolymermischungen der Beispiele 1 - 4 und der Vergleichsversuche V1-V6 wurden die in Tabelle 1 angegebenen Gewichtsanteile an SB I und SB II auf einem Entgasungsextruder gemischt. Die mechanischen Werte der Blockcopolymermischungen sind in Tabelle 2 zusammengestellt. Bis zu 40 Gew.-% SB I bleibt die Streckspannung und der Zugverformungsrest auf dem niedrigen Niveau des Blockcopolymeren SB II.

**Tabelle 1: Mechanische Eigenschaften der Blends aus Styrol-Butadien-Blockcopolymeren und II**

| Beispiel | SB I/SB II [Gew.-%] | E-Modul [%] | Streckspannnung [MPa] | Bruchdehnung [%] | Zugfestigkeit [MPa] | Spannung bei 400% [MPa] | Zugverformungsrest bei 300% Dehnung [%] |
|---|---|---|---|---|---|---|---|
| SB I | 100/0 | 530 | 12.5 | 402 | 32.6 | 32.6 | 206 |
| V1 | 90/10 | 619 | 11.21 | 428 | 32 | 29.6 | |
| V2 | 80/20 | 662 | 11.25 | 429 | 31.5 | 27.7 | |
| V3 | 70/30 | 541 | 9.34 | 479 | 30.4 | 22.4 | |
| V4 | 65/35 | 382 | 8.25 | 494 | 29.8 | 18.1 | |
| V5 | 60/40 | 258 | 7.01 | 497 | 29.2 | 17 | |
| V6 | 50/50 | 255 | 6.1 | 514 | 35.6 | 15.5 | |
| 1 | 40/60 | 175 | 4.87 | 519 | 33.05 | 14.6 | 103 |
| 2 | 30/70 | 131 | 3.97 | 529 | 31.19 | 13.2 | 94 |
| 3 | 20/80 | 105 | 3.64 | 535 | 29.5 | 12.5 | 68 |
| 4 | 10/90 | 87 | 3.21 | 556 | 27.7 | 10.8 | 60 |
| SB II | 0/100 | 65 | 2.91 | 579 | 25.79 | 9.1 | 56 |

## Patentansprüche

1. Mischungen enthaltend
a) 5 bis 40 Gew.-% eines linearen Blockcopolymeren aus vinylaromatischen Monomeren und Dienen der Struktur (I) S₁-(B/S)₁-S₂ mit einem Weichphasenanteil (B/S)₁ von höchstens 55 Gew.-%, bezogen auf das Blockcopolymer (I) und
b) 95 bis 60 Gew.-% eines linearen Blockcopolymeren aus vinylaromatischen Monomeren und Dienen der Struktur (II) S₃-(B/S)₂-S₄ mit einem Weichphasenanteil (B/S)₂ von mindestens 65 Gew.-%, bezogen auf das Blockcopolymer (II)
wobei
S₁ für einen Block aus vinylaromatischen Monomeren mit einer zahlenmittleren Molmasse Mₙ im Bereich von 40.000 bis 100.000 g/mol,
S₂, S₃ und S₄ jeweils für Blöcke aus vinylaromatischen Monomeren mit einer zahlenmittleren Molmasse Mₙ im Bereich von 5.000 bis 20.000 g/mol,
(B/S)₁ und (B/S)₂ jeweils für Copolymerblöcke aus Dienen und vinylaromatischen Monomeren mit einer zahlenmittleren Molmasse Mₙ im Bereich von 15.000 bis 40.000 g/mol stehen.

2. Mischungen nach Anspruch 1, **dadurch gekennzeichnet, dass** sie
a) 10 bis 30 Gew.-% des Blockcopolymeren der Struktur (I) und
b) 90 bis 70 Gew.-% des Blockcopolymeren der Struktur (II)
enthalten.

3. Mischungen nach Anspruch 1 oder 2, **dadurch gekennzeichnet, dass** das Verhältnis vinylaromatisches Monomer/Dien in den Blöcken (S/B)₁ oder (S/B)₂ im Bereich von 0,3 bis 0,7 liegt.

4. Mischungen nach einem der Ansprüche 1 bis 3, **dadurch gekennzeichnet, dass** die Blöcke (S/B)₁ und (S/B)₂ jeweils für Copolymerblöcke aus Dienen und vinylaromatischen Monomeren mit statistischer Verteilung stehen.

5. Mischungen nach einem der Ansprüche 1 bis 4, **dadurch gekennzeichnet, dass** die zahlenmittleren Molmassen Mₙ von
S₁ im Bereich von 45.000 bis 70.000, von
S₂, S₃, und S₄ jeweils im Bereich von 8.000 bis 17.000 g/mol, und von
(S/B)₁ und (S/B)₂ jeweils im Bereich von 18.000 bis 30.000 g/mol liegen.

6. Mischungen nach einem der Ansprüche 1 bis 5, **dadurch gekennzeichnet, dass** die Blöcke S₃ und S₄ die gleichen zahlenmittleren Molmassen Mₙ aufweisen.

7. Mischungen nach einem der Ansprüche 1 bis 6, **dadurch gekennzeichnet, dass** jeweils die zahlenmittleren Molmassen Mₙ von S₂ und S₄ und die zahlenmittleren Molmassen Mₙ von (S/B)₁ und (S/B)₂ den gleichen Wert aufweisen.

8. Verfahren zur Herstellung von Mischungen nach einem der Ansprüche 1 bis 8, **dadurch gekennzeichnet, dass** die Blockcopolymeren (I) und (II) jeweils durch sequentielle anionische Polymerisation von vinylaromatischen Monomeren und Dienen mit alkalimetallorganischen Initiatoren nacheinander oder in verschiedenen Reaktoren hergestellt und anschließend abgemischt werden.

9. Verfahren zur Herstellung von Mischungen nach Anspruch 7, **dadurch gekennzeichnet, dass** die Blockcopolymeren (I) und (II) gleichzeitig in einem Reaktor durch zweifache, gemeinsame Dosierung von alkalimetallorganischen Initiatoren und vinylaromatischen Monomeren initiiert und durch sequentielle anionische Polymerisation von vinylaromatischen Monomeren und Dienen polymerisiert.

## Claims

1. A blend comprising
a) from 5 to 40% by weight of a linear block copolymer of vinylaromatic monomers and dienes of the structure (I) S₁-(B/S)₁-S₂ having a flexible phrase fraction (B/S)₁ of not more than 55% by weight, based on the block copolymer (I) and
b) from 95 to 60% by weight of a linear block copolymer of vinylaromatic monomers and dienes of the structure (II) S₃-(B/S)₂-S₄ having a flexible phase fraction (B/S)₂ of at least 65% by weight, based on the block copolymer (II),
where
S₁ is a block of vinylaromatic monomers having a number average molar mass Mₙ in the range from 40 000 to 100 000 g/mol,
S₂, S₃ and S₄ are in each case blocks of vinylaromatic monomers having a number average molar mass Mₙ in the range from 5000 to 20 000 g/mol,
(B/S)₁ and (B/S)₂ are in each case copolymer blocks of dienes and vinylaromatic monomers having a number average molar mass Mₙ in the range from 15 000 to 40 000 g/mol.

2. The blend according to claim 1, which comprises
a) from 10 to 30% by weight of the block copolymer of the structure (I) and
b) from 90 to 70% by weight of the block copolymer of the structure (II).

3. The blend according to claim 1 or 2, wherein the vinylaromatic monomer/diene ratio in the blocks (S/B)₁ or (S/B)₂ is in the range from 0.3 to 0.7.

4. The blend according to any of claims 1 to 3, wherein the blocks (S/B)₁ and (S/B)₂ are in each case copolymer blocks of dienes and vinylaromatic monomers having a random distribution.

5. The blend according to any of claims 1 to 4, wherein the number average molar masses Mₙ of
S₁ is in the range from 45 000 to 70 000, of
S₂, S₃, and S₄ are in each case in the range from 8000 to 17 000 g/mol, and of
(S/B)₁ and (S/B)₂ are in each case in the range from 18 000 to 30 000 g/mol.

6. The blend according to any of claims 1 to 5, wherein the blocks S₃ and S₄ have the same number average molar masses Mₙ.

7. The blend according to any of claims 1 to 6, wherein in each case the number average molar masses Mₙ or S₂ and S₄ and the number average molar masses Mₙ of (S/B)₁ and (S/B)₂ have the same value.

8. A process for the preparation of a blend according to any of claims 1 to 8, wherein the block copolymers (I) and (II) are prepared in each case by sequential anionic polymerization of vinylaromatic monomers and dienes with organo-alkali metal initiators in succession or in different reactors and are then mixed.

9. A process for the preparation of a blend according to claim 7, wherein the block copolymers (I) and (II) are initiated simultaneously in a reactor by ducal, joint metering of organo-alkali metal initiators and vinylaromatic monomers and are polymerized by sequential anionic polymerization of vinylaromatic monomers and dienes.

## Revendications

1. Mélanges contenant
a) 5 à 40 % en poids d'un copolymère séquencé linéaire de monomères vinylaromatiques et de diènes de structure (I) S₁-(B/S)₁-S₂ ayant une teneur en phase souple (B/S)₁ d'au maximum 55 % en poids, par rapport au copolymère séquence (I) et
b) 95 à 60 % en poids d'un copolymère séquencé linéaire de monomères vinylaromatiques et de diènes de structure (II) S₃-(B/S)₂-S₄ ayant une teneur en phase souple (B/S)₂ d'au moins 65 % en poids, par rapport au copolymère séquencé (II)
S₁ représentant une séquence de monomères vinylaromatiques ayant une masse moléculaire moyenne en nombre Mₙ dans la plage de 40 000 à 100 000 g/mole,
S₂, S₃ et S₄ représentant chacun des séquences de monomères vinylaromatiques ayant une masse moléculaire moyenne en nombre Mₙ dans la plage de 5 000 à 20 000 g/mole,
(B/S)₁ et (B/S)₂ représentant chacun des séquences de copolymères de diènes et monomères vinylaromatiques ayant une masse moléculaire moyenne en nombre Mₙ dans la plage de 15 000 à 40 000 g/mole.

2. Mélanges selon la revendication 1, **caractérisés en ce qu'**ils contiennent
a) de 10 à 30 % en poids du copolymère séquencé de structure (I) et
b) de 90 à 70 % en poids du copolymère séquencé de structure (II).

3. Mélanges selon la revendication 1 ou 2, **caractérisés en ce que** le rapport monomère vinylaromatique/diène dans les séquences (S/B)₁ ou (S/B)₂ se situe dans la plage de 0,3 à 0,7.

4. Mélanges selon l'une quelconque des revendications 1 à 3, **caractérisés en ce que** les séquences (S/B)₁ et (S/B)₂ représentent chacune des séquences de copolymères de diènes et monomères vinylaromatiques à distribution statistique.

5. Mélanges selon l'une quelconque des revendications 1 à 4, **caractérisés en ce que** les masses moléculaires moyennes en nombre Mₙ de
S₁ se situent dans la plage de 45 000 à 70,000, de S₂, S₃ et S₄ se situent chacune dans la plage de 8 000 à 17 000 g/mole, et de
(S/B)₁ et (S/B)₂ se situent chacune dans la plage de 18 000 à 30 000 g/mole.

6. Mélanges selon l'une quelconque des revendications 1 à 5, **caractérisés en ce que** les séquences S₃ et S₄ ont les mêmes masses moléculaires moyennes en nombre Mₙ.

7. Mélanges selon l'une quelconque des revendications 1 à 6, **caractérisés en ce que** les masses moléculaires moyennes en nombre Mₙ de S₂ et S₄ et les masses moléculaires moyennes en nombre Mₙ de (S/B)₁ et (S/B)₂ ont la même valeur.

8. Procédé pour la préparation de mélanges selon l'une quelconque des revendications 1 à 8, **caractérisé en ce qu'**on prépare successivement ou dans des réacteurs différents les copolymères séquencés (I) et (II) chacun par polymérisation anionique séquentielle de monomères vinylaromatiques et de diènes avec des amorceurs organiques à métal alcalin et ensuite on les mélange.

9. Procédé pour la préparation de mélanges selon la revendication 7, **caractérisé en ce** les copolymères séquences (I) et (II) sont amorcés simultanément dans un réacteur par double addition dosée conjointe d'amorceurs organiques à métal alcalin et de monomères vinylaromatiques et polymérisés par polymérisation anionique séquentielle de monomères vinylaromatiques et de diènes.
